# EUROPÄISCHE PATENTSCHRIFT

(11) **EP 0 861 751 B1**
(45) Veröffentlichungstag und Bekanntmachung des Hinweises auf die Patenterteilung: **18.09.2002**
(21) Anmeldenummer: 98103087.7
(22) Anmeldetag: 21.02.1998
(51) Int. Cl.: B60K 35/00

(54) **Anzeigegerät für ein Fahrzeug**
Display device for a vehicle
Dispositif d'affichage pour véhicule

(30) Priorität: 28.02.1997 DE 19708263
(43) Veröffentlichungstag der Anmeldung: 02.09.1998
(73) Patentinhaber: GRUNDIG Aktiengesellschaft, 90471 Nürnberg (DE)
(72) Erfinder: Bienefeld, Axel, 90762 Fürth (DE)

(56) Entgegenhaltungen:
- EP-A- 0 672 892
- DE-A- 4 221 617
- FR-A- 2 667 026
- PATENT ABSTRACTS OF JAPAN vol. 096, no. 010, 31. Oktober 1996 & JP 08 156714 A (ALPINE ELECTRON INC), 18. Juni 1996

## Beschreibung

Die Erfindung betrifft ein Anzeigegerät, für ein Fahrzeug, welches eine Bedieneinheit, eine Steuerschaltung und eine Anzeigeeinheit aufweist, wobei die Anzeigeeinheit in einem Standbetriebsmodus und einem Fahrbetriebsmodus betreibbar ist.

Aus dem Bereich der Hörfunkempfänger mit Datenempfängem ist bekannt, daß vom Sender gemäß den Spezifkationen des Radio-Daten-Systems ein Text an den Empfänger, beispielsweise ein Autoradio, übertragen und in dessen Anzeige dargestellt wird. Falls nun der Fahrer den in der Anzeige des Autoradios angezeigten Text lesen möchte, muß er zwangsläufig den Blick vom Verkehrsgeschehen abwenden, was während der Fahrt die Unfallwahrscheinlichkeit drastisch erhöht.

Weiterhin ist aus dem Artikel "Bewegte Bilder, erschienen in der Zeitschrift HIFI-Vision, Ausgabe 3/1991, bekannt, in einem Kraftfahrzeug einen Femseher vorzusehen. Dabei wird nur dann auf dem Bildschirm des Fernsehers ein Bild dargestellt, wenn die Zündung nicht aktiviert ist.

Dies weist den Nachteil auf, daß auch mitfahrende Personen während der Fahrt den Fernseher bzw. dessen Anzeigeeinheit nicht nutzen können.

Ein ähnliche Realisierung von Fernsehen im Auto ist aus dem Artikel "TV im Auto - aber bitte nicht für den Fahrer", erschienen in der Zeitschrift Funkschau, Ausgabe 6/1995, bekannt, bei dem zwischen Stand-TV und Fahr-TV unterschieden wird. Beim Stand-TV ist der Femseh-Bildschirm für den Fahrer sichtbar angeordnet und wird während der Fahrt für andere Zwecke als die Darstellung von Fernsehbildern genutzt. Beim Fahr-TV wird der FernsehBildschirm so angebracht, daß der Fahrer ihn nicht einsehen kann. Gegebenenfalls ist ein weiterer Bildschirm im Fond des Kfz erforderlich, falls Mitfahrende auch während der Fahrt femsehen möchten.

Dies weist den Nachteil auf, daß mehrere Anzeigeeinheiten vorgesehen werden müssen, um auch während der Fahrt mitfahrenden Personen die Möglichkeit zum Fernsehen zu geben.

Aus der DE 41 07 021 A1 ist eine Vorrichtung zur Darstellung von Fernsehbildem in einem Kraftfahrzeug bekannt. Diese umfaßt einen an einer Mittelkonsole im Fahrgastraum des Kraftfahrzeugs installierten Fernsehmonitor und einen vor dem Bildschirm des Fernsehmonitors angeordneten Flüssigkristallfilter, der das Licht des Bildschirms vorzugsweise in Richtung auf den Beifahrersitz durchläßt, so daß der Fahrer das Bildschirmbild nicht erkennen kann, sofern eine Spannung an einer Elektrode des Flüssigkristallfilters anliegt. Zusätzlich ist zwischen dem Flüssigkristallfilter und dem Bildschirm ein Lamellenfilter vorgesehen, dessen Hauptfunktion darin besteht, eine Reflexion des Bildschirmbildes auf der Windschutzscheibe des Kraftfahrzeuges zu verhindern.

Dabei ist von Nachteil, daß Personen im Fond des Kraftfahrzeuges das Bildschirmbild ebenfalls nicht sehen können. Weiterhin besteht die Gefahr, daß der Fahrer keine Spannung an die Elektrode des Flüssigkristallfilters anlegt, so daß er auch während der Fahrt den Bildschirm betrachten kann.

Mit der zunehmenden Verbreitung von Navigationssystemen, elektronischen Landkarten und weiteren optischen Anzeigesystemen, die den Fahrer eines Kraftfahrzeuges unterstützen sollen, nimmt die Wahrscheinlichkeit weiter zu, daß diese auch wahrend der Fahrt vom Fahrer benutzt werden und dadurch die Unfallhäufigkeit zunimmt.

Aus dem Artikel "TV-Empfang im Auto", Funkschau 6195, Seiten 74 bis 79 ist eine Beschreibung zur Funktionsfähigkeit über momentan erhältliche Fernsehempfänger und Bildanzeigegeraten im PKW bekannt. Dieser Artikel gibt aber keinen Aufschluß über neuere Lösungskonzepte, wie dies in der Erfindung erfolgt.

Weiterhin sind aus der nicht vorveröffentlichten deutschen Patentanmeldung 196 33 417 der Anmelderin Verfahren und eine Anordnung zur Veränderung der Funktion eines mobilen Gerätes bekannt. Eines dieser Verfahren besteht darin, die Ein- und/oder Ausgabemittel an flexiblen Befestigungsmitteln anzuordnen, mittels Detektoren die Geschwindigkeit des Fahrzeugs festzustellen, mittels weiterer Detektoren die momentane Position der Einund/oder Ausgabemittel im Fahrzeug festzustellen und die Funktionen der Einund/oder Ausgabemittel zumindest teilweise zu ändern, wenn das Fahrzeug eine Mindestgeschwindigkeit überschreitet und der Fahrer die Ein- und/oder Ausgabemittel aufgrund deren Position im Fahrzeug benutzen kann. Ein weiteres dieser Verfahren besteht darin, mittels Detektoren die Geschwindigkeit des Fahrzeugs festzustellen, mittels weiterer Detektoren festzustellen, ob sich weitere Personen im Fahrzeug befinden und die Funktionen der Ein- und/oder Ausgabemittel zumindest teilweise zu ändern, wenn das Fahrzeug eine Mindestgeschwindigkeit überschreitet und sich keine weiteren Personen im Fahrzeug befinden.

Aus EP 0 672 892 A1 ist ein Anzeigegerät für ein Fahrzeug bekannt. Dieses Anzeigegerät weist eine Bedieneinheit, eine Steuerschaltung und eine Anzeigeeinheit auf. Die Anzeigeeinheit ist in einem Standbetriebsmodus und in einem Fahrbetriebsmodus betreibbar. Der Fahrbetriebsmodus umfasst eine Vielzahl von Anzeigearten und aus dieser Vielzahl von Anzeigearten ist mittels der Bedieneinheit eine gewünschte Anzeigeeinheit auswählbar. Die Anzeigeart im Fahrbetriebsmodus ist zum Einsetzen einer Lauftext- oder Laufbilddarstellung vorgesehen, wobei das Anzeigegerät bei schneller bewegten Fahrzeug von einer Sonderbetriebsart automatisch auf die Grundfunktionen zurückschaltet.

Die Aufgabe der Erfindung besteht darin, ein Anzeigegerät für ein Fahrzeug, mit den im Oberbegriff des Anspruchs 1 angegebenen Merkmalen derart weiterzubilden, daß der die Verkehrssicherheit und der Nutzerkomfort erhöht ist.

Diese Aufgabe wird bei einem Anzeigegerät mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

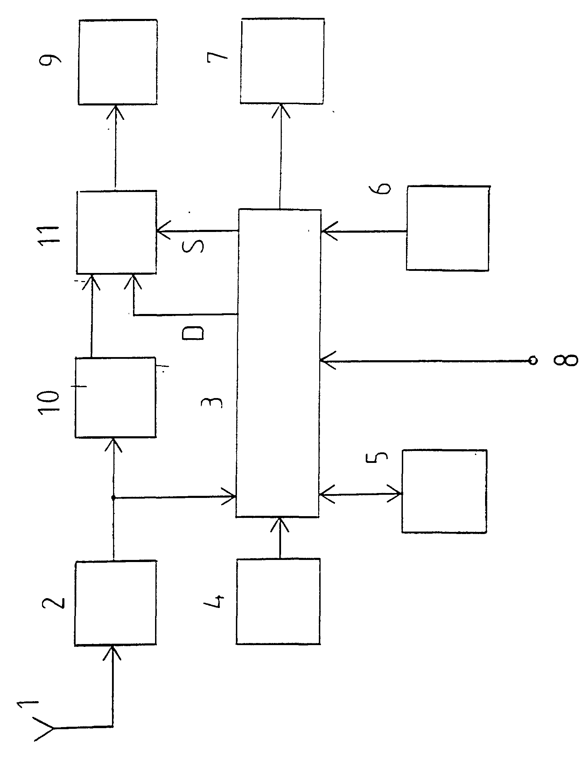

Die Vorteile der Erfindung bestehen im wesentlichen darin, daß der Benutzer selbst entscheiden kann, welche Informationen im Fahrbetriebsmodus angezeigt werden. Weitere Vorteile der Erfindung ergeben sich aus der Erläuterung eines Ausführungsbeispiels anhand der Figur, die ein Blockschaltbild eines Autoradios zeigt, das die erfindungsgemäßen Merkmale aufweist.

Das gezeigte Autoradio, bei dem es sich um ein RDS-Autoradio handelt, weist eine Antenne 1, ein Empfangsteil 2, einen Mikrocomputer 3, eine Bedientastatur 4, einen Senderspeicher 5, einen Festwertspeicher 6, eine Anzeige 7, einen Eingang 8 für ein von einem Geschwindigkeitssensor abgeleitetes Geschwindigkeitssignal, Lautsprecher 9, eine Signalverarbeitungsschaltung 10 und eine Eintastschaltung 11 auf.

Im Betrieb des Autoradios wird ein von einem Rundfunksender ausgestrahltes RDS-Rundfunksignal von der Antenne 1 empfangen und über einen Empfangsbaustein 2, eine Signalverarbeitungsschaltung 10 und eine Eintastschaltung 11 an die Lautsprecher 9 weitergeleitet. Das Ausgangssignal des Empfangsbausteins 2 wird weiterhin dem Mikrocomputer 3 zugeführt, in welchem im Rundfunksignal übertragene Zusatzinformationen abgetrennt und zu einer Darstellung auf der Anzeige 7 aufbereitet werden. Dabei führt der Mikrocomputer 3 in Ansprache auf Bediensignale, die mittels der Bedientastatur eingegeben werden, unter Verwendung von im Senderspeicher 5 abgelegten Daten die Abstimmung des Empfangsbausteins auf den jeweiligen Kanal durch.

Da es sich bei den von einem RDS-Sender abgestrahlten Zusatzinformationen auch um Lauftexte handeln kann, die beispielsweise Wettermeldungen, Werbung oder andere Anzeigen enthalten, besteht die Gefahr einer Ablenkung des Fahrers, wenn die im Mikrocomputer 3 aus dem übertragenen Signal abgetrennten Lauftexte auf der Anzeige 7 dargestellt werden. Widmet der Benutzer diesen Lauftexten eine zu große Aufmerksamkeit, dann besteht eine erhöhte Unfallgefahr.

Um diese herabzusetzen ist das Autoradio gemäß der Erfindung in einem Standbetriebsmodus und in einem Fahrbetriebsmodus betreibbar, wobei eine Anzeige von Lauftexten nur im Standbetriebsmodus möglich ist.

Zu diesem Zweck weist das Autoradio einen Anschluß 8 auf, an welchem ein von einem Geschwindigkeitssensor abgeleitetes Geschwindigkeitssignal anliegt, welches Auskunft über die momentane Fahrzeuggeschwindigkeit gibt. Dieses Signal wird dem Mikrocomputer 3 zugeführt und dort mit einem Schwellenwert verglichen, der im Festwertspeicher 6 abgespeichert ist. Dieser Schwellenwert kann beispielsweise einer Fahrgeschwindigkeit von 10 km/h entsprechen. Ist die ermittelte Fahrzeuggeschwindigkeit größer als der Schwellenwert, dann wird vom Mikrocomputer 3 automatisch der Fahrbetriebsmodus eingestellt, ist sie kleiner als der Schwellenwert, dann wird der Standbetriebsmodus aktiviert. Im Standbetriebsmodus erfolgt ohne jede Einschränkung eine Darstellung des Lauftextes auf der Anzeige 7, da der Fahrer seine Aufmerksamkeit ohne weiteres dem Lauftext widmen kann.

Im Fahrbetriebsmodus wird hingegen der übertragene Lauftext, der im Mikrocomputer als solcher identifiziert wird, durch eine Standbilddarstellung ersetzt. Diese Standbilddarstellung ist vom Benutzer auswählbar. Dieser kann mittels der Bedientastatur 4 in einer Sonderbetriebsart des Autoradios, in der auch die weiteren Grundfunktionen des Autoradios, wie die Grundhelligkeit der Anzeige und die Grundlautstärke des Autoradios, einstellbar sind, eine aus einer Vielzahl von Anzeigearten auswählen. Mögliche Anzeigearten sind eine eingefrorene Darstellung eines Auszugs aus dem Lauftext, eine Darstellung einer Statusanzeige wie beispielsweise des Schriftzuges "NO SCROLL", eine Darstellung des Sendemamens wie beispielsweise "BAY3" oder die Darstellung einer Frequenzanzeige wie beispielsweise 99.8 MHz". Die zur Darstellung der Statusanzeige notwendigen Daten übernimmt der Mikrocomputer 3 aus dem Festwertspeicher 6, die zur Darstellung des Sendernamens bzw. der Sendefrequenz notwendigen Daten entweder aus dem übertragenen Rundfunksignal oder aus dem Senderspeicher 5.

Weiterhin kann die als Lauftext übertragene Information auch mittels eines Sprachsynthesizers in ein Sprachsignal umgewandelt und über die Eintastschaltung 11 anstelle des übertragenen Rundfunksignals über den (die) Lautsprecher 9 akustisch wiedergegeben werden. Zu diesem Zweck ist der Mikrocomputer 3 über eine Steuerleitung S und eine Datenleitung D mit der Eintastschaltung 11 verbunden.

Die genannte Sonderbetriebsart des Autoradios, in der die Auswahl der gewünschten Anzeigeart erfolgt, ist entweder durch Betätigung einer eigens zu diesem Zweck vorgesehenen Taste oder durch gleichzeitige Betätigung bestimmter, üblicherweise zu anderen Zwecken vorgesehener Tasten der Bedieneinheit 4 einleitbar. In dieser Sonderbetriebsart werden vorzugsweise im Rahmen einer menuegesteuerten Benutzerführung nacheinander die verschiedenen Grundeinstellwerte aufgerufen und dem Benutzer zur Veränderung angeboten.

Vorstehend wurde die Erfindung am Beispiel eines RDS-Autoradios beschrieben. Alternativ dazu kann es sich bei dem beanspruchten Anzeigegerät jedoch auch um ein in einem Fahrzeug angebrachtes Fernsehgerät handeln. In diesem Fall wird eine Laufbilddarstellung durch eine Standbilddarstellung ersetzt, bei der es sich um ein aus der Laufbilddarstellung abgeleitetes Standbild, eine Darstellung einer Statusanzeige, eines Sendemamens oder einer Senderfrequenz handeln kann.

Weist das Anzeigegerät zusätzlich ein Navigationsgerät auf, so kann im Fahrbetriebsmodus anstelle einer (nur im Standbetriebsmodus zugelassenen) detaillierten Landkartendarstellung eine Darstellung eines - einem Standbild entsprechenden - Richtungspfeiles erfolgen.

## Patentansprüche

1. Anzeigegerät für ein Fahrzeug, welches eine Bedieneinheit (4), eine Steuerschaltung (3) und eine Anzeigeeinheit (7) aufweist, wobei die Anzeigeeinheit (7) in einem Standbetriebsmodus und in einem Fahrbetriebsmodus betreibbar ist, der Fahrbetriebsmodus eine Vielzahl von Anzeigearten umfasst, aus einer Vielzahl von Anzeigearten mittels der Bedieneinheit (4) eine gewünschte Anzeigeart auswählbar ist und die Anzeigearten im Fahrbetriebsmodus zum Ersetzen einer Lauftext- oder Laufbilddarstellung vorgesehen sind, wobei das Anzeigegerät bei schneller bewegtem Fahrzeug von einer Sonderbetriebsart automatisch auf Grundfunktionen zurückschaltet,
**dadurch gekennzeichnet,**
**daß** die Anzeigearten des Fahrbetriebsmodus jeweils einer Standbilddarstellung entsprechen, die Auswahl der Anzeigeart in der Sonderbetriebsart des Anzeigegerätes durchführbar ist, die Sonderbetriebsart auch zur menügesteuerten Veränderung der Grundeinstellungen des Anzeigegerätes vorgesehen ist und die Sonderbetriebsart nur bei stehendem oder langsam bewegtem Fahrzeug einleitbar ist.

2. Anzeigegerät für ein Fahrzeug nach Anspruch 1,
**dadurch gekennzeichnet,**
**daß** eine gewünschte Anzeigeart im Fahrbetriebsmodus eine eingefrorene Darstellung aus einem Lauftext ist.

3. Anzeigegerät für ein Fahrzeug nach Anspruch 1 oder 2,
**dadurch gekennzeichnet,**
**daß** eine gewünschte Anzeigeart im Fahrbetriebsmodus die Darstellung einer Statusanzeige ist.

4. Anzeigegerät für ein Fahrzeug nach einem oder mehreren der vorhergehenden Ansprüche,
**dadurch gekennzeichnet,**
**daß** eine gewünschte Anzeigeart im Fahrbetriebsmodus die Darstellung eines Sendernamens ist.

5. Anzeigegerät für ein Fahrzeug nach einem oder mehreren der vorhergehenden Ansprüche,
**dadurch gekennzeichnet,**
**dass** eine gewünschte Anzeigeart im Fahrbetriebsmodus die Darstellung einer Frequenzanzeige ist.

6. Anzeigegerät für ein Fahrzeug nach einem oder mehreren der vorhergehenden Ansprüche,
**dadurch gekennzeichnet,**
**daß** es akustische Ausgabemittel (9) aufweist und im Fahrbetriebsmodus eine akustische Ausgabe von Nachrichten erfolgt, die aus dem Lauftext abgeleitet sind.

7. Anzeigegerät für ein Fahrzeug nach einem oder mehreren der vorhergehenden Ansprüche,
**dadurch gekennzeichnet,**
**daß** die Sonderbetriebsart des Anzeigegerätes durch Betätigung einer bestimmten Taste oder Tastenkombination der Bedieneinheit (4) des Anzeigegerätes einleitbar ist.

8. Anzeigegerät für ein Fahrzeug nach einem oder mehreren der vorhergehenden Ansprüche,
**dadurch gekennzeichnet,**
**daß** das Anzeigegerät ein Autoradio oder ein mobiles Fernsehgerät ist.

9. Anzeigegerät für ein Fahrzeug nach einem oder mehreren der vorhergehenden Ansprüche,
**dadurch gekennzeichnet,**
**daß** das Anzeigegerät ein Navigationsgerät aufweist und eine gewünschte Anzeigeart im Fahrbetriebsmodus die Darstellung eines Richtungspfeiles ist.

10. Anzeigegerät für ein Fahrzeug nach einem oder mehreren der vorhergehenden Ansprüche,
**dadurch gekennzeichnet,**
**daß** das Anzeigegerät einen Signaländerungsdetektor zur Erkennung von Lauftexten oder Laufbildern und einen Fahrgeschwindigkeitsdetektor zur Ermittlung der momentanen Fahrzeuggeschwindigkeit aufweist, und die Steuerschaltung (3) eine automatische Umschaltung der Anzeigeeinheit (7) vom Standbetriebsmodus in den Fahrbetriebsmodus initiiert, wenn die ermittelte Fahrzeuggeschwindigkeit größer ist als ein vorgegebener Schwellwert.

## Claims

1. Display device for a vehicle, having an operating unit (4), a control circuit (3) and a display unit (7), wherein the display unit (7) can be operated in a stationary operating mode and in a travelling operating mode, the travelling operating mode comprises a multiplicity of types of display, a desired type of display can be selected from a multiplicity of types of display by means of the operating unit (4) and the types of display in the travelling operating mode are provided to replace a continuous-text or still-picture display, wherein the display unit automatically switches back from a special type of operation to a basic function when the vehicle is travelling fast, **characterized in that** the types of display of the travelling operating mode each correspond to a still-picture display, the selection of the type of display can be performed in the special type of operation of the display unit, the special type of operation is also provided for the menu-controlled alteration of the basic settings of the display unit and the special type of operation can be initiated only with the vehicle stationary or moving slowly.

2. Display device for a vehicle according to Claim 1, **characterized in that** a desired type of display in the travelling operating mode is a frozen display of a continuous text.

3. Display device for a vehicle according to Claim 1 or 2, **characterized in that** a desired type of display in the travelling operating mode is the presentation of a status display.

4. Display device for a vehicle according to one or more of the preceding claims, **characterized in that** a desired type of display in the travelling operating mode is the display of a transmitter name.

5. Display device for a vehicle according to one or more of the preceding claims, **characterized in that** a desired type of display in the travelling operating mode is the presentation of a frequency display.

6. Display device for a vehicle according to one or more of the preceding claims, **characterized in that** it has audible output means (9) and, in the travelling operating mode, an acoustic output takes place of messages that are derived from the continuous text.

7. Display device for a vehicle according to one or more of the preceding claims, **characterized in that** the special type of operation of the display device can be initiated by actuating a certain key or key combination of the operating unit (4) of the display device.

8. Display device for a vehicle according to one or more of the preceding claims, **characterized in that** the display device is a car radio or a mobile television set.

9. Display device for a vehicle according to one or more of the preceding claims, **characterized in that** the display device has a navigation unit and a desired type of display in the travelling operating mode is the display of a direction arrow.

10. Display device for a vehicle according to one or more of the preceding claims, **characterized in that** the display device has a signal change detector for detecting continuous texts or motion pictures and a travelling speed detector for determining the instantaneous vehicle speed and the control circuit (3) initiates an automatic switchover of the display unit (7) from the stationary operating mode to the travelling operating mode if the vehicle speed determined is greater than a specified threshold value.

## Revendications

1. Appareil d'affichage pour un véhicule qui dispose d'une unité de commande (4), d'un circuit pilote (3) et d'une unité d'affichage (7), cette unité d'affichage (7) étant exploitable en mode d'exploitation de position et en mode d'exploitation de déplacement, le mode d'exploitation de déplacement englobant un grand nombre de types d'affichage différents, un type d'affichage souhaité pouvant être sélectionné à partir du grand nombre de types d'affichage différents au moyen de l'unité de commande (4) et les types d'affichage étant prévus en mode d'exploitation de déplacement pour remplacer une représentation de texte en mouvement ou d'image en mouvement, l'appareil d'affichage étant replacé automatiquement du mode d'exploitation spécial aux fonctions de base lorsque le véhicule accélère,
**se caractérisant par le fait que**
les types d'affichage du mode d'exploitation de déplacement correspondent à chaque fois à une représentation d'image fixe, que le choix du type d'affichage peut être exécuté dans le mode d'exploitation spécial de l'appareil d'affichage, que le mode d'exploitation spécial est aussi prévu pour les modifications pilotées par menu des réglages de base de l'appareil d'affichage et que le mode d'exploitation spécial ne peut être introduit que si le véhicule est à l'arrêt ou se déplace lentement.

2. Appareil d'affichage pour un véhicule selon la revendication 1,
**se caractérisant par le fait que**
un type d'affichage souhaité en mode d'exploitation de déplacement est une représentation figée extraite d'un texte en mouvement.

3. Appareil d'affichage pour un véhicule selon la revendication 1 ou 2,
**se caractérisant par le fait que**
un type d'affichage souhaité en mode d'exploitation de déplacement est la représentation d'un affichage d'état.

4. Appareil d'affichage pour un véhicule selon l'une ou plusieurs des revendications précédentes,
**se caractérisant par le fait que**
un type d'affichage souhaité en mode d'exploitation de déplacement est la représentation d'un nom d'émetteur.

5. Appareil d'affichage pour un véhicule selon l'une ou plusieurs des revendications précédentes,
**se caractérisant par le fait que**
un type d'affichage souhaité en mode d'exploitation de déplacement est la représentation d'un affichage de fréquence.

6. Appareil d'affichage pour un véhicule selon l'une ou plusieurs des revendications précédentes,
**se caractérisant par le fait que**
il dispose d'un élément de sortie (9) acoustique et qu'il y a en mode d'exploitation de déplacement une sortie acoustique de messages qui sont dérivés du texte en mouvement.

7. Appareil d'affichage pour un véhicule selon l'une ou plusieurs des revendications précédentes,
**se caractérisant par le fait que**
le mode d'exploitation spécial de l'appareil d'affichage peut être introduit en actionnant une touche précise ou une combinaison de touches de l'unité de commande (4) de l'appareil d'affichage.

8. Appareil d'affichage pour un véhicule selon l'une ou plusieurs des revendications précédentes,
**se caractérisant par le fait que**
l'appareil d'affichage est une autoradio et un poste de télévision mobile.

9. Appareil d'affichage pour un véhicule selon l'une ou plusieurs des revendications précédentes,
**se caractérisant par le fait que**
l'appareil d'affichage dispose d'un appareil de navigation et qu'un type d'affichage souhaité en mode d'exploitation de déplacement est la représentation d'une flèche d'orientation.

10. Appareil d'affichage pour un véhicule selon l'une ou plusieurs des revendications précédentes,
**se caractérisant par le fait que**
que l'appareil d'affichage dispose d'un détecteur de modification de signal pour reconnaître les textes en mouvement ou les images en mouvement et d'un détecteur de vitesse du véhicule pour déterminer la vitesse actuelle du véhicule et que le circuit pilote (3) initie une commutation automatique de l'unité d'affichage (7) du mode d'exploitation de position en mode d'exploitation de déplacement, lorsque la vitesse du véhicule ainsi déterminée est supérieure à une valeur seuil prédéterminée.
